# EUROPÄISCHE PATENTSCHRIFT

(11) **EP 1 246 870 B1**
(45) Veröffentlichungstag und Bekanntmachung des Hinweises auf die Patenterteilung: **09.05.2007**
(21) Anmeldenummer: 00991168.6
(22) Anmeldetag: 12.12.2000
(51) Int. Cl.: C08L 69/00, C08K 3/34

(54) **POLYCARBONAT-FORMMASSEN MIT SPEZIELLEM TALK**
POLYCARBONATE MOLDING COMPOUNDS CONTAINING A SPECIAL TALC
MATIERES MOULABLES A BASE DE POLYCARBONATE CONTENANT DU TALC SPECIAL

(30) Priorität: 24.12.1999 DE 19962929
(43) Veröffentlichungstag der Anmeldung: 09.10.2002
(73) Patentinhaber: Bayer MaterialScience AG, 51368 Leverkusen (DE)
(72) Erfinder: WARTH, Holger, 41539 Dormagen (DE); SEIDEL, Andreas, 41542 Dormagen (DE); ECKEL, Thomas, 41540 Dormagen (DE); WITTMANN, Dieter, 51375 Leverkusen (DE); KELLER, Bernd, 47608 Geldern (DE)
(86) Internationale Anmeldenummer: PCT/EP2000/012563
(87) Internationale Veröffentlichungsnummer: WO 2001/048087

(56) Entgegenhaltungen:
- EP-A- 0 391 413
- EP-A- 0 452 788
- DE-A- 19 753 541
- DATABASE WPI Section Ch, Week 199731 Derwent Publications Ltd., London, GB; Class A23, AN 1997-337186 XP002167170 & JP 09 137054 A (SUMITOMO DOW KK), 27. Mai 1997 (1997-05-27)

## Beschreibung

Die vorliegende Erfindung betrifft mit speziellem Talk gefüllte Polycarbonat-Zusammensetzungen, die sich durch hohe Zähigkeit, Zäh-Sprödübergänge bei tiefen Temperaturen sowie gute Verarbeitbarkeit bei geringen Wärmeausdehnungskoeffizienten kennzeichnen.

Gefüllte bzw. verstärkte PC/ABS-Formmassen sind bekannt.

In EP-A 0 391 413 werden zum Beispiel PC/ABS-Formmassen, enthaltend anorganische Füllstoffe mit speziellen geometrischen Eigenschaften beschrieben, wobei die Formmassen durch einen geringeren linearen thermischen Ausdehnungskoeffizienten, eine hohe Zähigkeit bei Stoßbeanspruchung sowie eine hohe Wärmeformbeständigkeit spezifiziert werden. Als erfindungsgemäße Füllstoffe werden Talk und nichtkalzinierte Tonmaterialien beschrieben.

In EP-A 0 452 788 werden talkhaltige PC/ABS-Formmassen beschrieben, die sich besonders durch eine matte Materialoberfläche auszeichnen.

WO 09851737 beschreibt mineralgefüllte PC/ AES Blends, bei denen 65-85 Gew% PC mit 10-50 Gew.-% eines kautschukmodifizierten Thermoplasten mit 1-15 Gew% eines mineralischen Füllers für Formmassen eingesetzt werden sowie deren Anwendungen im Bereich Karosserieaußenteile. Vorteile sollen bei der verbesserten Dimensionsstabilität, thermischen Eigenschaft, Kerbschlagzähigkeit und Fließeigenschaften gegenüber dem Stand der Technik liegen.

Aufgabe der vorliegenden Erfindung ist die Verbesserung der Kerbschlagzähigkeit und somit des Zäh-Spröd-Überganges zu tieferen Temperaturen. Insbesondere für Karosserieaußenteile ist ein tiefer Zäh-Spröd-Übergang von großer Wichtigkeit, da auch bei deutlichen Minusgraden bei einem Unfall das spröde Splittern des eingesetzten Materiales zu schwerwiegenden Verletzungen führen kann.

Es wurde nun gefunden, dass schlagzähmodifizierte Polycarbonat-Zusammensetzungen, die den unten beschriebenen speziellen Talk enthalten, die gewünschte Eigenschaft aufweisen. Das Eigenschaftsprofil der erfindungsgemäßen Zusammensetzungen ermöglicht insbesondere einen Einsatz zur Herstellung von Karosserieaußenteilen mit hervorragender Oberflächengüte für Anwendungen, die auch bei tiefen Temperaturen einen Schutz durch umherfliegende Materialsplitter erfordern.

Gegenstand der vorliegenden Erfindung sind somit Polycarbonat-Zusammensetzungen enthaltend Schlagzähmodifikator und 0,05 bis 40, vorzugsweise 0,5 bis 30 Gew.-Teile, besonders bevorzugt 1 bis 20 Gew.-Teile bezogen auf die Gesamtzusammensetzung eines speziellen Talks mit einem Al₂O₃-Gehalt von kleiner als 1 Gew.-%, vorzugsweise kleiner gleich 0,9, insbesondere kleiner gleich 0,7 Gew.-%, ganz besonders kleiner gleich 0,5 Gew.-%, jeweils bezogen auf den Talk.

Bevorzugt sind Polycarbonat-Zusammensetzungen enthaltend
A) 30 bis 98 Gew.-Teile, vorzugsweise 40 bis 95 Gew.-Teile, besonders bevorzugt 45 bis 90 Gew.-Teile mindestens eines aromatischen Polycarbonats,
B) 0,5 bis 50, vorzugsweise 1 bis 40, besonders bevorzugt 1,5 bis 30, ganz besonders bevorzugt 5 bis 25 Gew.-Teile mindestens eines Pfropfpolymerisats,
C) 0,05 bis 40, insbesondere 0,5 bis 30 Gew.-Teile, besonders bevorzugt 1 bis 20 Gew.-Teile, ganz besonders bevorzugt 2 bis 15 Gew.-Teile eines Talks gemäß der hier angegebenen Definition.

Die Summe der Gewichtsteile aller Komponenten (A bis C sowie gegebenenfalls weiterer Bestandteile) ergibt dabei 100.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-OS 2 232 877, DE-OS 2 703 376, DE-OS 2 714 544, DE-OS 3 000 610, DE-OS 3 832 396; zur Herstellung aromatischer Polyestercarbonate z. B. DE-OS 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 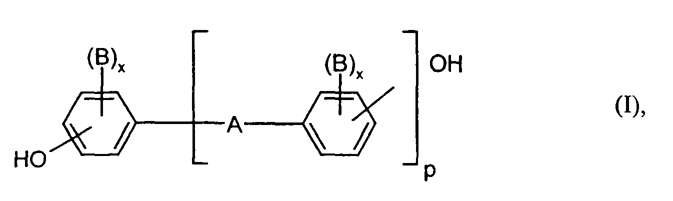 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (II) oder (III) 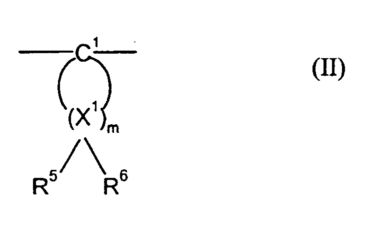 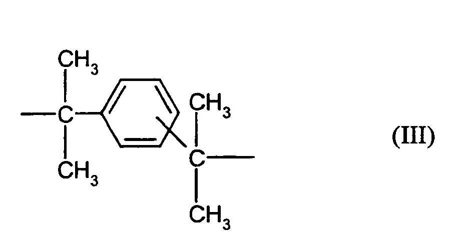
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kembromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 15 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-Patent 3 419 634) bzw. nach literaturbekannten Verfahren herstellbar. Die Herstellung Polydiorganosiloxanhaltiger Copolycarbonate wird z. B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-OS 2 940 024 und DE-OS 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäureteträchlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente B

Die Komponente B umfasst ein oder mehrere Pfropfpolymerisate von
B.1 5 bis 95, vorzugsweise 30 bis 90 Gew.-%, wenigstens eines Vinylmonomeren auf
B.2 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere B. sind vorzugsweise Gemische aus
B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
B.1.2 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere B.1.1 sind ausgewählt aus mindestens einem der Monomere Styrol, α-Methylstyrol und Methylmethacrylat, bevorzugte Monomere B.1.2 sind ausgewählt aus mindestens einem der Monomere Acrylnitril, Maleinsäureanhydrid und Methylmethacrylat.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke. EP(D)M-Kautschuk-basierte Systeme eignen sich insbesondere für witterungsstabile Formmassen

Bevorzugte Pfropfgrundlagen B.2 sind Dienkautschuke (z. B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb <10°C, vorzugsweise <0°C, besonders bevorzugt <-10°C liegt.

Besonders bevorzugt ist reiner Polybutadienkautschuk. EP(D)M-Kautschuk ist ebenfalls besonders bevorzugt.

Besonders bevorzugte Polymerisate B sind z.B. ABS-Polymerisate (Emulsions-, Masse- und Suspensions-ABS), wie sie z. B. in der DE-OS 2 035 390 (=US-PS 3 644 574) oder in der DE-OS 2 248 242 (=GB-PS 1 409 275) bzw. in Ullmann, Enzyklopädie der Technischen Chemie, Bd. 19 (1980), S. 280 ff. beschrieben sind. Der Gelanteil der Pfropfgrundlage B.2 beträgt mindestens 30 Gew.-%, vorzugsweise mindestens 40 Gew.-% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt, besonders bevorzugt durch Massepolymerisation.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß B.2 der Polymerisate B sind vorzugsweise Polymerisate aus Acrylsäurealkylestern, gegebenenfalls mit bis zu 40 Gew.-%, bezogen auf B.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropgrundlagen gemäß B.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente C

Unter Talk wird ein natürlich vorkommender oder synthetisch hergestellter Talk verstanden.

Reiner Talk hat die chemische Zusammensetzung 3 MgO·4SiO₉·H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Die speziellen Talksorten im erfindungsgemäßen Sinne zeichnen sich aus durch eine besonders hohe Reinheit, gekennzeichnet durch einen Al₂O₃-Gehalt von kleiner als 1 Gew.-%, bevorzugt kleiner gleich 0,9 Gew.-%, besonders bevorzugt kleiner gleich 0,7 Gew.-%, insbesondere kleiner gleich 0,5 Gew.-%, aus. Bevorzugte Talksorten im erfindungsgemäßen Sinne zeichnen sich neben der hohen Reinheit (Al₂O₃-Gehalt) durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-% aus.

Kommerziell verfügbare Talktypen, die dieser Definition entsprechen, sind z.B. Naintsch A3, A7, A10, A30 und Naintsch Prever M30 der Firma Naintsch Mineralwerke GmbH (Graz, Österreich) sowie die Typen Finntalc M05SL, MO3, M05 und M20SL, die durch die Firma Omya GmbH (Köln) vertrieben werden.

Vorteilhaft ist insbesondere der Einsatz des erfindungsgemäßen Talkes in Form von feinvermahlenen Typen mit einer mittleren größten Teilchengröße d₅₀ von <20 µm, bevorzugt <10 µm, besonders bevorzugt <5 µm, insbesondere bevorzugt <2,5 µm.

Talktypen im nicht erfindungsgemäßen Sinne sind z.B. Naintsch SE-Standard, Naintsch SE-Super, Naintsch SE-Micro sowie Naintsch ST 10, 15, 20, 30 und 60, die allesamt von der Firma Naintsch Mineralwerke GmbH vertrieben werden sowie Westmin Talk vertrieben über die Firma Omya, MP5O-26, MP99-10, MP99-54 sowie M25-38 der Firma Pfizer.

### Weitere Zusatzstoffe D

Die erfindungsgemäßen Zusammensetzungen können auch weitere Polymere enthalten.

Geeignet sind bevorzugt Vinyl(co)Polymerisate (D.2) von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
D.2.1 50 bis 99, vorzugsweise 60 bis 90 Gew.-Teilen Vinylaromaten und/oder kernsubstituierten Vinylaromaten wie beispielsweise Styrol, α-Methylstyrol, p-Methylstyrol, p-Chlorstyrol) und/oder Methacrylsäure-(C₁-C₈)-Alkylester wie z.B. Methylmethacrylat, Ethylmethacrylat), und
D.2.2 1 bis 50, vorzugsweise 10 bis 40 Gew.-Teilen Vinylcyanide (ungesättigte Nitrile) wie Acrylnitril und Methacrylnitril und/oder (Meth)Acrylsäure-(C₁-C₈)-Alkylester (wie z.B. Methylmethacrylat, n-Butylacrylat, t-Butylacrylat) und/oder ungesättigte Carbonsäuren (wie Maleinsäure) und/oder Derivate (wie Anhydride und Imide) ungesättigter Carbonsäuren (beispielsweise Maleinsäureanhydrid und N-Phenyl-Maleinimid).

Die (Co)Polymerisate D.2 sind harzartig, thermoplastisch und kautschukfrei.

Besonders bevorzugt ist das Copolymerisat aus D.2.1 Styrol und D.2.2 Acrylnitril.

Die (Co)Polymerisate gemäß D.2 sind bekannt und lassen sich durch radikalische Polymerisation, insbesondere durch Emulsions-, Suspensions-, Lösungs- oder Massepolymerisation herstellen. Die (Co)Polymerisate gemäß Komponente D.1 besitzen vorzugsweise Molekulargewichte M_{w} (Gewichtsmittel, ermittelt durch Lichtstreuung oder Sedimentation) zwischen 15 000 und 200 000.

Geeignet sind weiterhin Polyalkylenterephthalate (D.3) wie sie in EP-A-841 187 beschrieben sind.

Bevorzugt sind Polyalkylenterephthalate, die aus Terephthalsäure und/oder deren reaktionsfähigen Derivaten (z.B. deren Dialkylestem) und Ethylenglykol und/oder Butandiol-1,4 hergestellt worden sind, und Mischungen dieser Polyalkylenterephthalate.

Vorzugsweise enthalten die erfindungsgemäßen Zusammensetzungen Vinyl(co)polymerisate, Polyalkylenterephthalate oder Mischungen hieraus bis zu einer Menge von 35, besonders bevorzugt bis 30 Gew.-%, bezogen auf die Gesamt-Zusammensetzung. Ganz besonders bevorzugt enthalten die erfindungsgemäßen Zusammensetzungen 5 bis 30 Gew.-%, bezogen auf die Gesamt-Zusammensetzung, Vinyl/co)polymerisat, Polyalkylenterephthalat oder Mischungen hieraus.

Die erfindungsgemäßen Formmassen können wenigstens ein weiteres der üblichen Additive, wie z.B. Antitropfmittel, Gleit- und Entformungsmittel, Nukleiermittel, Antistatika, Stabilisatoren, Farbstoffe, Flammschutzmitel und Pigmente sowie von Talk verschiedene Füll- und Verstärkungsstoffe enthalten.

Die erfindungsgemäßen Formmassen enthaltend die obengenannten Komponenten und gegebenenfalls Zusätze, werden hergestellt, indem man die jeweiligen Bestandteile in bekannter Weise vermischt und bei Temperaturen von 200°C bis 300°C in üblichen Aggregaten wie Innenknetem, Extrudern und Doppelwellenschnecken schmelzcompoundiert oder schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die erfindungsgemäßen thermoplastischen Formmassen eignen sich aufgrund ihrer ausgezeichneten Schlagzähigkeit sowie ihrer guten weiteren Eigenschaften wie z.B. ESC-Verhalten (Spannungsrissbeständigkeit), Steifigkeit, Wärmeformbeständigkeit, Fließfähigkeit und Verzugsarmut zur Herstellung von Formkörpern jeglicher Art, insbesondere von solchen mit erhöhten Anforderungen an einen Zäh-Spröd-Übergang bei tiefen Temperaturen.

Die Formmassen der vorliegenden Erfindung können zur Herstellung Formkörper, insbesondere auch mit dünnen Wandstärken verwendet werden. Die Formkörper können z.B. durch Spritzguss oder Extrusion hergestellt werden. Beispiele für herstellbare Formkörper sind: Gehäuseteile jeder Art, z.B. für Haushaltsgeräte wie Saftpressen, Kaffeemaschinen, Mixer; für Büromaschinen, wie Monitore, (tragbare) Computer, Drucker und Kopierer. Weitere mögliche Einsatzgebiete sind Abdeckplatten und Elektroinstallationskanäle für den Bausektor sowie Teile für den Kfz-Sektor (z.B. Karosserieaußenteile oder Karosserieinnenteile). Die Formmassen sind außerdem auf dem Gebiet der Elektrotechnik z.B. für Schalter, Steckdosen und Platinen einsetzbar.

Gegenstand der Erfindung sind ebenfalls Verfahren zur Herstellung der Zusammensetzung, Verwendung der Zusammensetzung zur Herstellung von Formkörpern sowie die Formkörper selbst.

### Beispiele

### Komponente A

Polycarbonat auf Basis Bisphenol A mit einer relativen Lösungsviskosität von 1,28, gemessen in Methylenchlorid bei 25°C und in einer Konzentration von 0,5 g/100 ml.

### Komponente B.1

Pfropfpolymerisat, hergestellt durch Emulsionspolymerisation, von 45 Gew.-Teilen Styrol und Acrylnitril im Verhältnis von 72:28 auf 55 Gew.-Teilen eines teilchenförmigen vernetzten Polybutadienkautschuks (mittlerer Teilchendurchmesser d₅₀ = 0,3 bis 0,4 µm).

### Komponente B.2

Dow Magnum 3904, Masse ABS der Firma Dow Chem..

### Komponente C

C1: Westmin Talk, Talk der Firma Talk der Firma Mondo Minerals Oy (Helsinki, Finnland), vertrieben durch die Firma Omya GmbH (Köln) mit einem MgO-Gehalt von 31 Gew.-%, einem SiO₂-Gehal von 61 Gew.-%, und einem Al₂O₃-Gehalt von 1,0 Gew.-%, d₅₀ = 2,5 µm (Vergleich).
C2: Finntalc M05SL, Talk der Firma Mondo Minerals Oy (Helsinki, Finnland), vertrieben durch die Firma Omya GmbH (Köln) mit einem MgO-Gehalt von 31 Gew.-%, einem SiO₂-Gehalt von 61 Gew.-%, und einem Al₂O₃-Gehalt von 0,3 Gew.-%, d₅₀ = 2 µm.
C3: Finntalc M20SL, Talk der Firma Mondo Minerals Oy mit einem MgO-Gehalt von 31 Gew.-%, einem SiO₂-Gehalt von 61 Gew.-% und einem Al₂O₃-Gehalt von 0,3 Gew.-%, d₅₀ = 6 µm.
C4: Finntalc M30SL, Talk der Firma Mondo Minerals Oy mit einem MgO-Gehalt von 31 Gew.-%, einem SiO₂-Gehalt von 61 Gew.-% und einem Al₂O₃-Gehalt von 0,3 Gew.-%, d₅₀ = 8,5 µm.
C5: Naintsch A3, Talk der Firma Naintsch Mineralwerke GmbH mit einem MgO-Gehalt von 31,5 Gew.-%, einem SiO₂-Gehalt von 62,0 Gew.-% und einem Al₂O₃-Gehalt von 0,4 Gew.-%, d₅₀ =1,2 µm.

Bei den angegebenen chemischen Zusammensetzungen handelt es sich um Herstellerangaben. Die Analytik erfolgt nach literaturbekannten Methoden (z.B. durch Röntgenfluoreszenzspektroskopie oder Atomadsorptionsspektroskopie oder Kalorimetrie).

### Komponente D-1

Styrol/Acrylnitril-Copolymerisat mit einem Styrol/Acrylnitril-Verhältnis von 72:28 und einer Grenzviskosität von 0,55 dl/g (Messung in Dimethylformamid bei 20°C).

### Komponente D-2

Phosphitstabilisator

### Komponente D-3

Pentaerythrittetrastearat als Entformungsmittel

### Herstellung und Prüfung der erfindungsgemäßen Formmassen

Das Mischen der Komponenten A bis D erfolgt auf einem 3 1-Innenkneter. Die Formkörper werden auf einer Spritzgießmaschine Typ Arburg 270E bei 240°C hergestellt.

Die Bestimmung der Kerbschlagzähigkeit erfolgt nach Methode ISO 180 1A an Stäben der Abmessung 80 x 10 x 4 mm bei Raumtemperatur.

Die Bestimmung der Wärmeformbeständigkeit nach Vicat B erfolgt gemäß DIN 53 460.

Die Bestimmung des Zug-E-Moduls erfolgt nach DIN 53 457/ISO 527.

**Tabelle 1: Zusammensetzung der Formmassen**

| **Beispiel** | **A** | **B1** | **B2** | **D1** | **C1** | **C5** | **C2** | **C3** | **C4** | **D3** | **D2** |
|---|---|---|---|---|---|---|---|---|---|---|---|
| 1 | 55,1 | 14,7 | | 22 | | 7,4 | | | | 0,7 | 0,1 |
| 2 Vergleich | 55,1 | 14,7 | | 22 | 7,4 | | | | | 0,7 | 0,1 |
| 3 | 55,1 | 14,7 | | 22 | | | 7,4 | | | 0,7 | 0,1 |
| 4 | 55,1 | 14,7 | | 22 | | | | 7,4 | | 0,7 | 0,1 |
| 5 | 55,1 | 14,7 | | 22 | | | | | 7,4 | 0,7 | 0,1 |
| 6 | 55,1 | 2,7 | 34 | | | 7,4 | | | | 0,7 | 0,1 |

**Tabelle 2: Ergebnisse**

| **Beispiel** | **aₖ [kJ/m²]** | **Zäh-/Spröd-Übergang [°C]** | **Zug-E-Modul [N/mm]** | **Vicat B120 [°C]** |
|---|---|---|---|---|
| 1 | 34 | -5 | 3040 | 127 |
| 2 Vergleich | 13s¹) | >RT | 2920 | 126 |
| 3 | 26s | >RT | 2800 | nb²) |
| 4 | 21s | >RT | 2826 | nb |
| 5 | 16s | >RT | 2883 | nb |
| 6 | 55 | -25 | 2960 | 126 |

| | | | | |
|---|---|---|---|---|
| ¹⁾ S = spröd ²⁾ nb = nicht bestimmt | | | | |

Aus Tabelle 2 geht hervor, dass die erfindungsgemäßen Beeispiele bei vergleichbarem Zug-E-Modul und Vicat-Temperatur eine deutlich bessere Schlagzähigkeit zeigen als das Vergleichsbeispiel

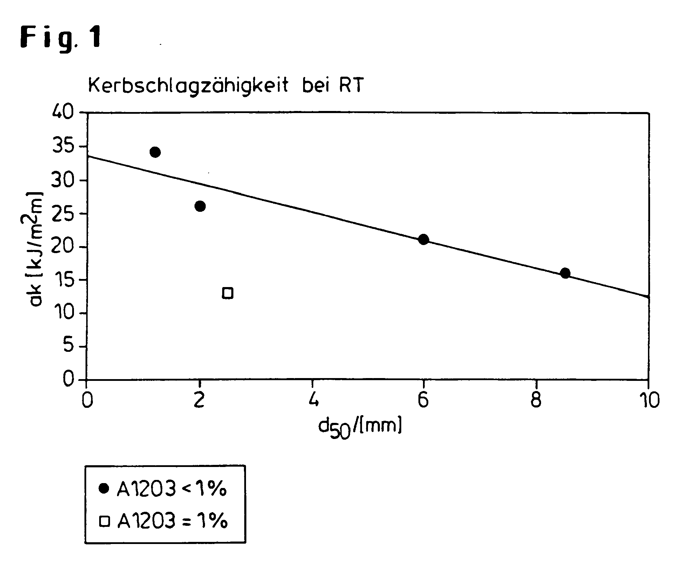

Trägt man den mittleren Teilchendurchmesser gegen die Kerbschlagzähigkeit auf (Fig. 1) so findet man erwartungsgemäß eine Zunahme der Kerbschlagzähigkeit zu kleinerer Partikelgröße. Überraschend hingegen ist, dass ein höherer Al₂O₃ Gehalt (Quadrat) selbst bei kleinen Partikelgrößen zu einer merklichen Verschlechterung der Kerbschlagzähigkeit führt. Die Verwendung von Masse ABS (Bsp. 6) bietet im Vergleich zu Emulsions ABS (Bsp.1) bei ansonsten gleicher Füllstoffzusammensetzung zusätzlich noch eine deutliche Erhöhung der Kerbschlagzähigkeit um 62% und ein Absinken des Zäh-Spröd-Überganges um 20°C.

## Patentansprüche

1. Zusammensetzungen enthaltend Polycarbonat, mindestens ein durch radikalische MassePolymerisation erhaltenes Pfropfpolymerisat von 5 bis 95 Gew.-% (bezogen auf das Pfropfpolymerisat) wenigstens eines Vinylmonomeren auf 95 bis 5 Gew.-% (bezogen auf das Pfropfpolymerisat) mindestens einer Pfropfgrundlage mit einer Glastemperatur < 10°C und einen Talk hoher Reinheit, **gekennzeichnet durch** einen Al₂O₃, Gehalt von < 1 Gew.%, bezogen auf den Talk.

2. Zusammensetzungen gemäß Anspruch 1 enthaltend 40 bis 98 Gew.-% mindestens eines aromatischen Polycarbonats, 0,5 bis 50 Gew.-% mindestens eines Pfropfpolymerisats und 0,05 bis 40 Gew.-% Talk.

3. Zusammensetzungen gemäß Anspruch 1 enthaltend 45 bis 95 Gew.-% mindestens eines aromatischen Polycarbonats, 1 bis 35 Gew.-% mindestens eines Pfropfpolymerisat und 0,5 bis 30 Gew.-% Talk

4. Zusammensetzungen gemäß Anspruch 1 enthaltend einen Talk, **gekennzeichnet durch** einen MgO-Gehalt von 30-33 Gew.-%, einen SiO₂-Gehalt von 58 bis 64 Gew.-% und einen Al₂O₃-Gehalt von < 1,0 Gew.-%, jeweils bezogen auf den Talk.

5. Zusammensetzungen gemäß Anspruch 1 enthaltend einen Talk, **gekennzeichnet durch** einen Al₂O₃-Gehalt von < 0,9 Gew.-%, bezogen auf den Talk.

6. Zusammensetzungen gemäß Anspruch 5, enthaltend einen Talk, **gekennzeichnet durch** einen Al₂O₃-Gehalt von <0,7 Gew.-%.

7. Zusammensetzungen gemäß Anspruch 1, **dadurch gekennzeichnet, daß** das Pfropfpolymerisat auf der Grundlage von Dien-, EP(D)M-, Acrylat- oder Silikonkautschuken als Pfropfgrundlage hergestellt wurde.

8. Zusammensetzungen gemäß Anspruch 1 enthaltend Vinyl(co)polymerisate, Polyalkylenterephthalate oder Mischungen daraus.

9. Zusammensetzungen gemäß Anspruch 1, bis 8 enthaltend bis zu 30 Gew.-%, bezogen auf die Gesamtzusammensetzung, Vinyl(co)polymerisat.

10. Zusammensetzungen gemäß Anspruch 1-9 enthaltend weitere Additive ausgewählt aus mindestens einem aus der Gruppe der Gleit- und Entformungsmittel, Nukleirmittel, Antistatika, Stabilisatoren, Farbstoffe und Pigmente sowie von Talk verschiedene Füll- und Verstärkungsstoffe.

11. Zusammensetzungen gemäß Anspruch 1 enthaltend 50 bis 90 Gew.-% mindestens eines aromatischen Polycarbonats, 1,5 bis 25 Gew.-% mindestens eines Masse-ABS, 0 bis 20 Gew.-% eines Vinyl(co)polymerisats, und 1 bis 20 Gew.-% eines Talks mit einem MgO-Gehalt von 30-33 Gew.-%, einem SiO₂-Gehalt von 58 bis 64 Gew.-% und einem Al₂O₃-Gehalt von < 1,0 Gew.-%, jeweils bezogen auf den Talk.

12. Verfahren zur Herstellung der Zusammensetzungen gemäß Anspruch 1 bis 11, wobei die einzelnen Komponenten gemischt und bei erhöhter Temperatur compoundiert werden.

13. Verwendung der Zusammensetzungen gemäß einem oder mehreren der Ansprüche 1 bis 11 zur Herstellung von Formkörpern bzw. Formteilen jeglicher Art.

14. Formkörper bzw. Formteile, erhältlich aus den Zusammensetzungen gemäß einem oder mehreren der Ansprüche1 bis 11.

15. Formteile gemäß Anspruch 14, wobei es sich bei diesen Formteilen um Karosserieaußenteile oder Karosserieinnenteile handelt.

## Claims

1. Compositions containing polycarbonate, at least one graft polymer obtained by radical bulk polymerisation of 5 to 95 wt.% (based on the graft polymer) of at least one vinyl monomer on 95 to 5 wt.% (based on the graft polymer) of at least one graft base having a glass transition temperature of < 10°C and a highly pure talc, **characterised by** an Al₂O₃ content of < 1 wt.%, based on the talc.

2. Compositions according to claim 1 containing 40 to 98 wt.% of at least one aromatic polycarbonate, 0.5 to 50 wt.% of at least one graft polymer and 0.05 to 40 wt.% talc.

3. Compositions according to claim 1 containing 45 to 95 wt.% of at least one aromatic polycarbonate, 1 to 35 wt.% of at least one graft polymer and 0.5 to 30 wt.% talc.

4. Compositions according to claim 1 containing a talc **characterised by** an MgO content of 30-33 wt.%, an SiO₂ content of 58 to 64 wt.% and an Al₂O₃ content of < 1.0 wt.%, all based on the talc.

5. Compositions according to claim 1 containing a talc **characterised by** an Al₂O₃ content of < 0.9 wt.%, based on the talc.

6. Compositions according to claim 5 containing a talc **characterised by** an Al₂O₃ content of < 0.7 wt.%.

7. Compositions according to claim 1 **characterised in that** the graft polymer was produced on the basis of diene, EP(D)M, acrylate or silicone rubbers as the graft base.

8. Compositions according to claim 1 containing vinyl (co)polymers, polyalkylene terephthalates or mixtures thereof.

9. Compositions according to claim 1 to 8 containing up to 30 wt.%, based on the total composition, of vinyl (co)polymer.

10. Compositions according to claim 1 to 9 containing further additives selected from at least one of the group of lubricants and release agents, nucleating agents, antistatics, stabilisers, dyes and pigments, and fillers and reinforcing agents other than talc.

11. Compositions according to claim 1 containing 50 to 90 wt.% of at least one aromatic polycarbonate, 1.5 to 25 wt.% of at least one bulk ABS, 0 to 20 wt.% of a vinyl (co)polymer, and 1 to 20 wt.% of a talc having an MgO content of 30-33 wt.%, an SiO₂ content of 58 to 64 wt.% and an Al₂O₃ content of < 1.0 wt.%, all based on the talc.

12. Process for the production of the compositions according to claim 1 to 11, wherein the individual components are mixed and are compounded at elevated temperature.

13. Use of the compositions according to one or more of claims 1 to 11 for the manufacture of mouldings or moulded parts of any type.

14. Mouldings or moulded parts obtainable from the compositions according to one or more of claims 1 to 11.

15. Moulded parts according to claim 14, wherein these moulded parts are exterior or interior vehicle body parts.

## Revendications

1. Compositions contenant un polycarbonate, au moins un polymère greffé, obtenu par polymérisation radicalaire en masse, de 5 à 95 % en poids (sur le poids du polymère greffé) d'au moins un monomère vinylique sur 95 à 5 % en poids (sur le poids du polymère greffé) d'au moins un support de greffage ayant une température de transition du second ordre inférieure à 10 °C, et un talc à haute pureté, ce dernier **se caractérisant par** une teneur en Al₂O₃ inférieure à 1 % de son poids.

2. Compositions selon la revendication 1 contenant 40 à 98 % en poids d'au moins un polycarbonate aromatique, 0,5 à 50 % en poids d'au moins un polymère greffé et 0,05 à 40 % en poids de talc.

3. Compositions selon la revendication 1 contenant 45 à 95 % en poids d'au moins un polycarbonate aromatique, 1 à 35 % en poids d'au moins un polymère greffé et 0,5 à 30 % en poids de talc.

4. Compositions selon la revendication 1 contenant un talc qui se **caractérise par** une teneur en MgO de 30 à 33 % en poids, une teneur en SiO₂ de 58 à 64 % en poids et une teneur en Al₂O₃ inférieure à 1,0 % en poids, toutes ces teneurs se rapportant au poids du talc.

5. Compositions selon la revendication 1 contenant un talc qui se **caractérise par** une teneur en Al₂O₃ inférieure à 0,9 % de son en poids.

6. Compositions selon la revendication 5 contenant un talc qui se **caractérise par** une teneur en Al₂O₃ inférieure à 0,7 % de son en poids.

7. Compositions selon la revendication 1, **caractérisées en ce que** le polymère greffé a été préparé à base de caoutchoucs diéniques, EP(D)M, d'acrylates ou de silicones servant de supports de greffage.

8. Compositions selon la revendication 1 contenant des (co)polymères vinyliques, des téréphtalates de polyalkylène ou leurs mélanges.

9. Compositions selon les revendications 1 à 8 contenant jusqu'à 30 % de leur poids total, d'un (co)polymère vinylique.

10. Compositions selon les revendications 1 à 9 contenant d'autres additifs choisis parmi au moins un additif du groupe des agents lubrifiants et de démoulage, des agents de nucléation, des agents antistatiques, des stabilisants, des colorants et pigments et des matières de charge et matières renforçantes autres que le talc.

11. Compositions selon la revendication 1 contenant 50 à 90 % en poids d'au moins un polycarbonate aromatique, 1,5 à 25 % en poids d'au moins un polymère ABS préparé en masse, 0 à 20 % en poids d'un (co)polymère vinylique et 1 à 20 % en poids d'un talc à une teneur en MgO de 30 à 33 % en poids, une teneur en SiO₂ de 58 à 64 % en poids et une teneur en Al₂O₃ inférieure à 1,0 % en poids, toutes ces teneurs se rapportant au poids du talc.

12. Procédé pour la préparation des compositions selon les revendications 1 à 11, selon lequel on mélange les composants individuels puis on les homogénéise à température élevée.

13. Utilisation des compositions selon une ou plusieurs des revendications 1 à 11 pour la fabrication d'objets moulés ou de pièces moulées de tous types.

14. Corps moulés ou pièces moulées obtenus à partir des compositions selon une ou plusieurs des revendications 1 à 11.

15. Pièces moulées selon la revendication 14, consistant en pièces extérieures de carrosserie ou pièces intérieures de carrosserie.
